# EUROPEAN PATENT APPLICATION

(11) **EP 4 044 046 A1**
(43) Date of publication of application: **17.08.2022**
(21) Application number: 21156505.6
(22) Date of filing: 11.02.2021
(51) Int. Cl.: G06F 16/50, G06T 7/50

(54) **DEPTH ORDERS FOR MULTI-VIEW FRAME STORING AND RENDERING**

(71) Applicant: Koninklijke Philips N.V., 5656 AG Eindhoven (NL)
(72) Inventor: VAREKAMP, Christiaan, 5656 AE Eindhoven (NL)
(74) Representative: Philips Intellectual Property & Standards

(57) **Abstract**

A method for storing multi-view data with depth order data. The method comprises obtaining image frames of a scene from an imaging system with a plurality of cameras, obtaining depth maps from the imaging system and/or the image frames and obtaining qualitative depth information relating to the depth of at least one object present in the scene relative to other objects in the scene, the qualitative depth information being additional to the information conveyed by the depth map. A depth order is determined for a set of at least two objects present in the scene based on the qualitative depth information, wherein the depth order determines the depth of an object relative to other objects with different depth orders. The image frames of the scene, the corresponding depth maps and the depth order for the objects in the scene are then stored as the multi-view data.

## Description

### FIELD OF THE INVENTION

The invention relates to storing and rendering multi-view frames. In particular, the invention relates to the depth information stored for multi-view frames.

### BACKGROUND OF THE INVENTION

Approaches that render from multi-view image formats typically combine warped textures from multiple reference cameras using a given blending operation. The source data typically consists of textures with associated transparency (alpha) and depth/disparity information.

The blending operation itself can depend on variables such as reference and target camera position/orientation (e.g. ray angle differences), depth variation, de-occlusion, transparency and color differences. More advanced techniques can use a trained convolutional neural network to perform blending.

Approaches that render from a layered representation (layered depth image, LDI, multiplane image MPI, multi sphere image, MSI) typically have a render method that is optimal for the layered format. For instance, MPI rendering uses back to front rendering with an over operation and a pre-multiplied alpha.

Multi-view 3D formats have the advantage that conversion to a single layered representation is not necessary. However, correct depth order handling needs to depend on the depth map which can be uncertain due to estimation errors or coding noise. This can result in render errors, for example, near the foot of a sports player where it touches the ground surface. The depth of the foot is close to the depth of the ground surface and thus the ground surface may wrongly cover the foot in a synthesized view.

There is a need to prevent depth rendering errors but in a way which does not require substantial additional data transfer or processing.

### SUMMARY OF THE INVENTION

The invention is defined by the claims.

According to examples in accordance with an aspect of the invention, there is provided a method for storing multi-view data with depth order data, the method comprising:
obtaining image frames from an imaging system comprising a plurality of cameras imaging a scene;
obtaining depth maps from the imaging system and/or the image frames, with a depth map corresponding to an image frame;
obtaining qualitative depth information relating to the depth of at least one object present in the scene relative to other objects in the scene, the qualitative depth information being additional to the information conveyed by the depth map;
determining a depth order for a set of at least two objects present in the scene based on the qualitative depth information, wherein the depth order determines the depth of an object relative to other objects with different depth orders; and
storing the image frames of the scene, the corresponding depth maps and the depth order for the objects in the scene.

Objects with one depth order (e.g. 1) are known to be in front of objects with different depth order (e.g. 0) and behind objects with another depth order (e.g. 2). Thus, the depth order provides a categorization of the depths of different objects.

Multi-view data formats typically rely on various image frames of the same scene to create the texture data and depth maps for the image frames to give each pixel a depth value. However, the depth maps introduce depth uncertainty which can cause objects of a similar depth to overlap each other erroneously.

For example, the foot of a soccer player is often at a similar depth to the field the player is standing on. If the depth uncertainty from a depth map causes the foot to have a lower depth value than the ground it is standing on, the ground may be rendered above the foot.

It is thus proposed to include additional qualitative depth information, which may be considered to be prior knowledge of the depth of objects of the scene, when writing multi-view data formats in order to give such objects a depth order. In the previous example of the soccer player, the field is known to always be behind all of the players. Thus, the soccer field is given a depth order of 0 which corresponds to the furthest depth. This depth order is provided as separate qualitative depth order data additional to the information in the depth map. It may be information provided as part of a calibration and/or it may be extracted from analysis of the images but separate to the generation of the depth map. The player is given a depth order of 1, thus defining that the player is always in front of the soccer field regardless of the depth map values. Inaccuracies in the depth map may thereby be tolerated.

Qualitative depth information is based on the comparison between the depth of the objects in the same scene. For example, a visual inspection of the scene can provide the qualitative depth information (e.g. the soccer player is always above the soccer field). The real depth values of the objects are not necessary but can be used to determine the qualitative depth information by comparing the real values to each other.

The use of a depth order value which corresponds to a whole object (i.e. one value for the whole background) also drastically reduces the data required to provide accurate depth information. For example, for two depth orders (e.g. background and non-background objects) only 1 bit of additional metadata is required.

Other metadata may be required to define the size and position of each object dependent on the implementation of the method. However, defining the size and position of an object requires significantly less additional data and processing than for example refining the method of producing depth maps to take account of such qualitative depth information.

Storing the image frames may comprise creating a packed frame for each depth order and storing the packed frames, wherein a packed frame comprises a map of one or more objects in each image frame and the positions of the objects within the map.

Packed frames are typically images that contain a collage of images from multiple cameras. The packed frames also contain metadata with instructions on how to recover each image from the packed frame. For example, each image may comprise a rectangular area within the packed frame, and the metadata could specify the size of the rectangle and the origin of the rectangle for each image frame.

Thus, all of the objects with the same depth order can be stored in the same packed frame, thus having a packed frame for each depth order.

The method may further comprise determining an object region for each at least one of the objects in the image frames, wherein a depth order is determined for each object region.

For example, an object detection algorithm can be applied to the image frames to output a region corresponding to each object in the scene.

The object regions may refer to areas or patches corresponding to an object. This may reduce the requirement of finding objects in the image frames when using a segmentation algorithm. For example, an algorithm may roughly clusters patches based on object membership and assign a depth order per patch based on the object membership.

Determining an object region may be based on applying a segmentation algorithm to the image frames.

A segmentation algorithm can be configured to segment a particular object (e.g. a soccer player) from a scene in each one of the image frames, thus defining an object based on the outline output by the segmentation algorithm.

A so called over segmentation into super pixels could also be used. Segmenting out objects (e.g. soccer player) is sometimes difficult. Often, it is easier to find super pixels (e.g. small 4-connected pixel regions) and determine the object class for those regions.

Determining depth orders for each object region may be based on the size of the object region.

The size of an object region can indicate the relative depth of the object compared to, for example, the object size in previous image frames and/or expected sizes and pre-determined depths.

The method may further comprise calibrating the imaging system by identifying one or more objects in at least one of the image frames, wherein obtaining the qualitative depth information of at least one object is based on the calibration.

For example, an imaging system for a soccer field can be calibrated in the image frames prior to any players being present in the field. Thus, the depth order of the field can be set to 0 prior to any players being present on the field. Any players on the field after the calibration could, for example, be set to a depth order of 1.

The invention also provides a method for rendering a new view from multi-view image frames with depth order data, the method comprising:
receiving at least two image frames of the scene and the depth order for a set of at least two objects present in the scene;
creating a texture layer for each depth order based on processing the objects corresponding to each depth order in all received image frames separately; and
combining the texture layers based on their corresponding depth orders.

A texture layer is created for each depth order (i.e. each depth level) to ensure that objects with a lower depth value (in the depth map) than, for example, the background (e.g. due to depth map uncertainty) but with a higher depth order are rendered above the background (or any other objects behind said object). The texture layers can then be combined back to front (i.e. background first) to create the multi-view image frame.

The texture layers may comprise transparent pixels and non-transparent pixels for the objects with the respective depth order.

The texture layer corresponding to depth order = 1 (i.e. non-background layer) may have transparent pixels around all of the object with depth order = 1. For example, all of the players on a soccer field may have depth order = 1 whilst the soccer field has depth order = 0. In this case, the texture layer of depth order = 1 would only have the texture data of the players and the rest of the layer would be transparent.

A texture layer may be created by setting all pixel values to transparent and further setting pixels which correspond to the object to non-transparent values.

Combining the texture layers may be based on alpha compositing. Variations on alpha compositing may also be used. After the objects/patches from the image frames have been blended to the output pixel per depth order, other known compositing techniques can also be used.

Each pixel, or set of pixels, of each texture layer may comprise a transparency value. The transparency value may further relate to the transparency and the blending weight of the pixels, or set of pixels.

The output transparency value, in the range [0,1], of the texture layer may be used to encode both the transparency (i.e. the real alpha value) and the blending weight. For example, when the transparency value is below a threshold t ∈ [0,1], the transparency value can be interpreted as the true alpha value for the purpose of compositing between layers. However, when the transparency value is above the threshold t it can be interpreted as a relative blending weight between views. The blending weight may, for instance, depend on ray-angle differences, spatial proximity and/or depth map gradients. A transparency value of t=0.5 would give equal importance (i.e. bit depth) to both alpha compositing and view blending.

Artificial or externally captured graphics objects can also be added to the scene after the texture layers have been combined.

Processing the objects of a particular depth order to create a texture layer may include combining the images of each object from all of the received image frames.

Multi-view blending is based on creating a composite object from multiple image frames and the known distances between the cameras which obtained the image frames. Thus, a multi-view image frame can be viewed from different viewpoints (i.e. from different angles).

The term "combining" may refer to blending the objects. Within a given depth order, multiple views may be 'blended' using a spatially varying, non-constant weight. This would be the case if, for instance, within a given depth order disocclusion in one of the views must be taken into account. In that case, the other view(s) may be contributing almost entirely.

Blending can spatially vary in order to deal optimally with occlusion and illumination changes. Note that the spatially variant weight is typically derived from a comparison of a view with associated depth maps after warping to the target viewpoint. In addition, view associated alpha information can be added to the blending logic. This is typically relevant around foreground edges to achieve a realistic new object boundary.

Creating the texture layers may be further based on the depth maps.

The depth order defines the depth of objects relative to other objects with different object orders. However, for objects with the same object order, the depth map is still used to determine the object depth relative to objects with the same object order. For example, all soccer players in a field may have object order = 1. However, each soccer player may also have a depth relative to the other soccer players (i.e. one soccer player in front of the other from certain angles).

The invention also provides a computer program product comprising computer program code means which, when executed on a computing device having a processing system, cause the processing system to perform all of the steps previously discussed.

The invention also provides a processor configured to perform all of the steps previously discussed.

The invention also provides a system for storing multi-view data, the system comprising:
an imaging system comprising a set of at least two cameras to obtain a plurality of image frames from different positions; and
the processor configured to store image frames, depth maps and depth order data in a memory.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a method for determining the depth order of objects;
Fig. 2 shows an illustrative example of a multi-view frame rendered with depth order;
Fig. 3 shows an implementation of depth order in packed frames;
Fig. 4 shows an image frame of a scene with a background and an object;
Fig. 5 shows a segmentation algorithm outputting an object region; and
Fig. 6 shows a method for rendering a view from multi-view image frames.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for storing multi-view data with depth order data. The method comprises obtaining image frames of a scene from an imaging system with a plurality of cameras, obtaining depth maps from the imaging system and/or the image frames and obtaining qualitative depth information relating to the depth of at least one object present in the scene relative to other objects in the scene, the qualitative depth information being additional to the information conveyed by the depth map. A depth order is determined for a set of at least two objects present in the scene based on the qualitative depth information, wherein the depth order determines the depth of an object relative to other objects with different depth orders. The image frames of the scene, the corresponding depth maps and the depth order for the objects in the scene are then stored as the multi-view data.

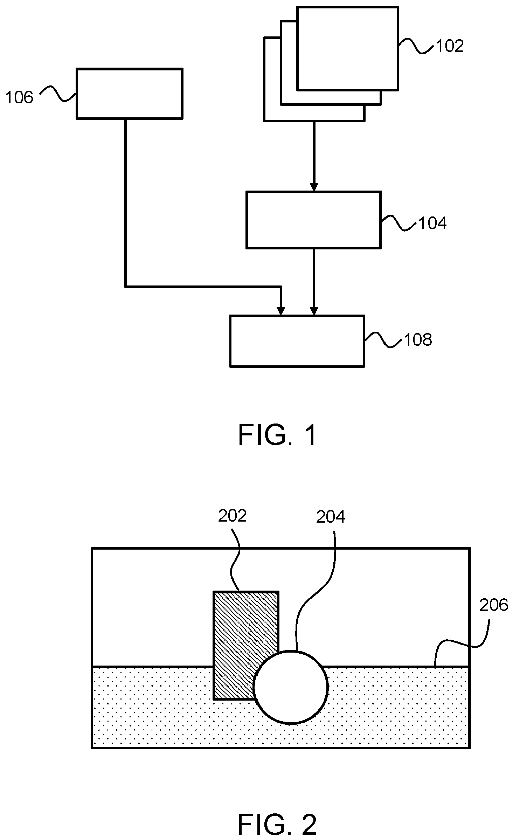

Fig. 1 shows a method for determining the depth order 108 of objects 104. Image frames 102 are obtained from a plurality of cameras which are imaging a scene, the scene containing one or more objects 104. Qualitative depth information 106 of the objects 104 is obtained which gives external information on the depth of the objects 104 relative to each other.

The qualitative depth information 106 can be obtained from a user input, pre-calibration of one of the objects 104, segmentation algorithms etc. For example, a user may indicate that a first object is always in front of a second object prior to obtaining the image frames 102. The user could also calibrate a static object (e.g. a building, the floor etc.) prior to, or during, the acquisition of the image frames 102 and state that the calibrated object is always behind any other object.

The image frames 102 are then analyzed in order to identify the objects 104 within each one of the image frames 102 and each one of the objects 104 is given a depth order 108 based on the qualitative depth information 106 received/obtained. The depth order 108 defines the ordering of the objects 104 (i.e. which object is in front of another object) relative to each other regardless of other further depth information which is obtained (e.g. from depth cameras).

The depth order 108 for objects 104 can be applied to image frames 102 or to packed frames and may also be applied to rectangular regions, regions of arbitrary shape or pixel regions (i.e. a dense map) of the image frames 102.

Fig. 2 shows an illustrative example of a multi-view frame rendered with depth order 108. The image scene contains two stationary objects 202 and 204 resting on a surface 206. The multi-view image will have been rendered from a plurality of image frames which image the scene from different angles and/or positions. Thus, a user viewing the multi-view image may be able to change the viewing angle and possibly the positions from which the scene is viewed.

As can be seen in the multi-view frame, object 204 is in front of object 202 and both objects 202 and 204 are resting above the surface 206. Typically, this depth information is obtained from depth maps which accompany, and can be created from, the image frames 102. Depth maps typically give each pixel (or groups of pixels) a numeric depth value such that the depth of each object can be calculated. However, depth maps contain estimation errors and coding noise which may make areas with similar depths appear in the wrong order.

For example, referring to the multi-view frame of Fig. 2, the lower part of object 202 has a very similar depth to the surface 206 directly below object 202. Thus, in some instances the lower part of object 202 may be rendered behind the surface 206 directly beneath it.

Thus, the inclusion of a depth order for each one of the objects 202 and 204 and for the surface 206 allows all of the object 202 to be rendered in front of the surface 206 and ignore any error or noise in the depth maps. The table below contains an example depth order for the objects 202 and 204 and the surface 206:

| Object | Qualitative Depth Information | Depth Order |
|---|---|---|
| Surface 206 | "Always behind objects 202 and 204" | 0 |
| Object 202 | - | 1 |
| Object 204 | - | 1 |

In this example, the surface 206 has a depth order of 0 and thus will always be behind any other object with a higher depth order. The objects 202 and 204 have the same depth order as no qualitative depth information 106 was given for them relative to each other. This may be due to the objects changing their depths relative to each other based on the viewing angle and/or the position of the viewpoint.

For example, if the viewpoint was opposite the current viewpoint (i.e. the scene is viewed from behind object 202), then object 202 would be in front of object 204. This could be addressed by giving conditional qualitative depth information (i.e. "Object 202 behind object 204 at viewing position A" and "Object 202 in front of object 204 at viewing position B"). Thus, the depth orders of the objects 202 and 204 could be different and change based on the position from which the scene is viewed. Alternatively, a model matrix can be used to define the viewpoints and/or the ordering of the depth orders. The model matrix combined with the view matrix then provides the required relative depth information.

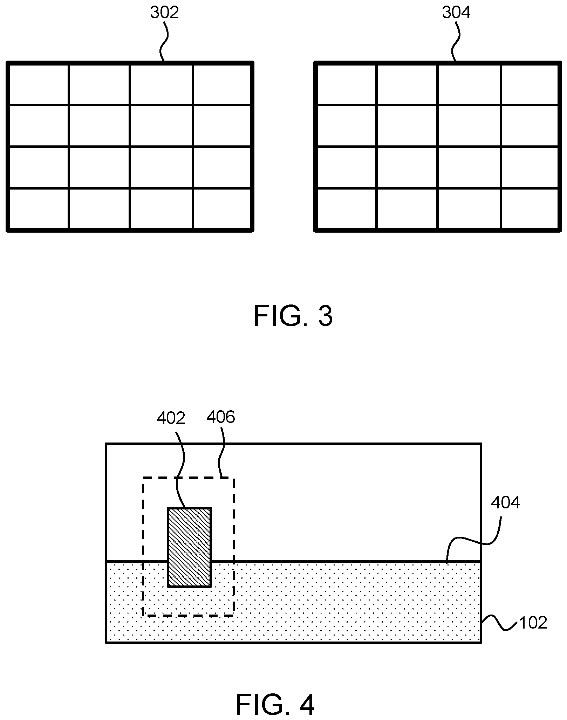

Fig. 3 shows an implementation of depth order in packed frames 302 and 304. Packed frames are images or maps which contain multiple image frames and/or objects from the image frames. The packed frames 302 and 304 in Fig. 3 contain 16 blocks, each block can contain an object (or image frame). Each packed frame 302 and 304 is accompanied with metadata which specifies the position of each one of the objects in the packed frame (i.e. the size of the rectangle and the position of rectangle on the packed frame for each object).

To reduce the metadata size, part of the distribution of blocks on a packed frame (i.e. an atlas grid) may be fixed, and the convention may be to place a rectangle in the lower left corner of an atlas grid cell. Although the packing will be less optimal, consuming more atlas pixels on average, the video bitrate will go down since objects are placed at a constant position in the packed frame thereby increasing temporal correlation. To further reduce meta-data, the convention may be that rectangles of a given level have the same size. This single size is then stored. The equal sized rectangles are then placed directly in the packed frame (with matching size) or scaled to fit that size. The latter approach reduces metadata size and parsing complexity. The approach can be used for sports scenes that are imaged from the side where close-by athletes will require a bigger rectangle and athletes further away will fit in a smaller rectangle. Since rectangle sizes per depth order are pre-determined, the athlete images can be padded with zero alpha to arrive at the required size for the given depth order.

With the addition of depth order for the objects, separate packed frames can be created for each depth order, where the blocks in a packed frame only contain objects with the depth order specified for the packed frame.

The packed frame 302 may only contain objects with a depth order of 0 and the packed frame 304 may only contain objects with a depth order of 1. For example, this can be used in multi-view frames of soccer matches. The packed frame 302 with depth order 0 can be used to store information on the soccer field, the goal posts and the crowd, and the packed frame 304 with depth order 1 can be used to store information on the players, the referee and the ball.

Fig. 4 shows an image frame of a scene with a background 404 and an object 402. The image frame also contains a region 406 (or an area) encompassing the object 402. The region 406 can be used to define the position of the object 402 within the image frame and thus obtain qualitative depth information of the object 402.

For example, the object 402 may be stationary (or at least stationary relative to the viewpoint of the image frame) and thus will always be found within the region 406. The region 406 containing the object 402 can be defined as having a depth order higher than the depth order of the background 404 and, as such, reduce the likelihood of rendering artefacts near the bottom of the object 402 where the object 402 meets the background 404.

The definition of the region 406 can be stored, for example, as the size of a rectangle and the center of the rectangle relative to the image frame within the metadata of the image frame. The region 406 may also change size and position within the image frame based on, for example, an object detection algorithm or external input from a user.

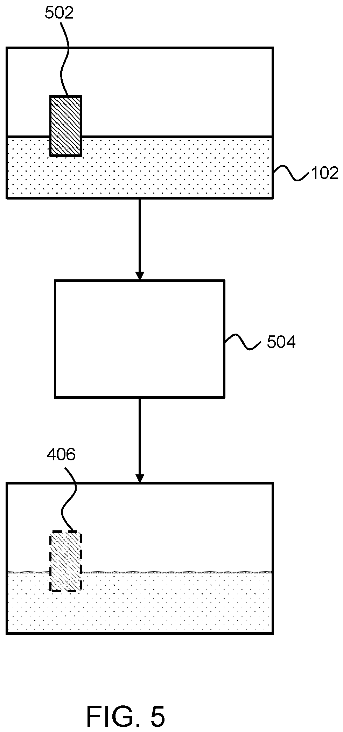

Fig. 5 shows a segmentation algorithm 504 outputting an object region 406. An image frame 102 is input into the segmentation algorithm 504, the segmentation algorithm 504 being capable of segmenting the object 502 from the image frame 102. Thus, the segmentation algorithm 504 can output a region 406 which corresponds to the outline of the object 502. Additionally, the segmentation algorithm 504 can be used on each consecutive image frame 102 to detect changes in the object 502. Changes in the object 502 may indicate a change in depth order, for example, based on the size and/or area of the region 406 becoming smaller relative to other objects.

Alternatively, a pixel map may be defined for each depth order instead of a region 406. The pixel map can define which pixels (or group of pixels) in an image frame 102 have the corresponding depth order. The pixel map may be beneficial, over the use of regions 406, when precise depth orders are required. A combination of pixel maps and regions 406 can also be used. Object detection algorithms and/or segmentation algorithms 504 can also be used to determine the regions 406 and/or the pixel maps.

A person skilled in the art will also be aware of other methods for determining the regions 406 and/or the pixel maps based on the corresponding objects and the qualitative depth information.

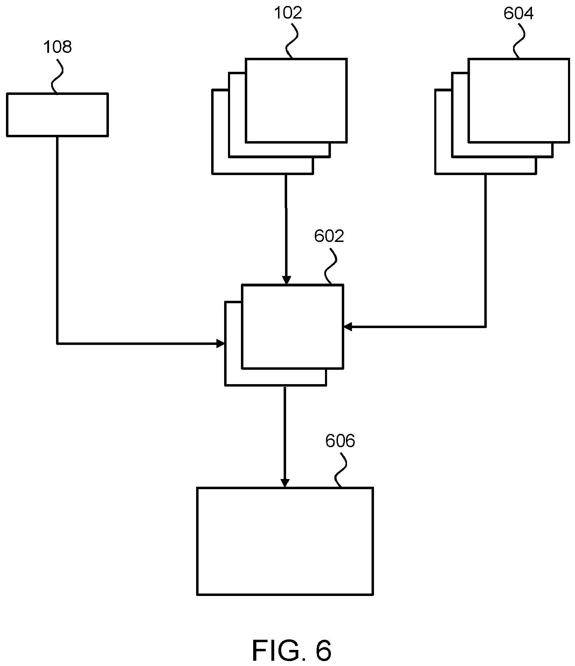

Fig. 6 shows a method for rendering a view 606 from multi-view image frames 102. The method may be used, for example, by a user device receiving multi-view data containing a set of image frames 102, a set of depth maps 604 and the depth order 108 metadata. Pixels from the image frames 102 that have the same depth order 108 are blended using a selected blending method that may use variables such as depth gradient, source transparency and ray angle differences between the source and target pixels. The blending result is written to a separate texture layer 602 for each depth order 108. A transparency (alpha) layer is produced for each texture layer 108. For example, the alpha is initialized to transparent for each pixel and only set to non-transparent when a pixel is being written to. Thus, the depth order 108 is used to render a texture layer 602 for each depth order 108 separately, optionally using blending, thereby also producing a texture layer 602 with a transparency map per depth order 108.

Optionally, the depth maps 604 can also be used to render each texture layer 602 so that each texture layer 602 has self contained depth. The resulting texture layers 602 are then combined using back-to-front compositing (e.g. alpha compositing) thus creating a multi-view frame 606. In the case where the depth maps 604 are also used to render the texture layers 602, the output multi-view frame 606 would look similar to typically rendered multi-view frames (i.e. only using image frames 102 and depth maps 604) but with a much lower likelihood of rendering artefacts occurring due to inaccuracies in the values of the depth maps 604. Since transparency (alpha) and depth buffer information (i.e. an incoming depth map) can be maintained, (traditional) graphics objects can be inserted into the scene during rendering. One way to do this is to render each object for each depth order.

The invention may be used for any multi-view image rendering, in particular to allow a user to select a viewpoint from which they wish to view the scene. The example used above of imaging of a sports area is of course just an example.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method for storing multi-view data with depth order data (108), the method comprising:
obtaining image frames (102) from an imaging system comprising a plurality of cameras imaging a scene;
obtaining depth maps (604) from the imaging system and/or the image frames (102), with a depth map (604) corresponding to an image frame (102);
obtaining qualitative depth information (106) relating to the depth of at least one object (104) present in the scene relative to other objects in the scene, the qualitative depth information (106) being additional to the information conveyed by the depth maps (604);
determining a depth order (108) for a set of at least two objects (104) present in the scene based on the qualitative depth information (106), wherein the depth order (108) determines the depth of an object (104) relative to other objects with different depth orders (108); and
storing the image frames (102) of the scene, the corresponding depth maps (604) and the depth order (108) for the objects (104) in the scene.

2. The method of claim 1, wherein storing the image frames (102) comprises creating a packed frame (302, 304) for each depth order and storing the packed frames (302, 304), wherein a packed frame comprises a map of one or more objects (104) in each image frame (102) and the positions of the objects (104) within the map.

3. The method of any one of claims 1 or 2, further comprising determining an object region (406) for the objects (104) in the image frames (102), wherein a depth order (108) is determined for each object region (108).

4. The method of claim 3, wherein determining an object region (406) is based on applying a segmentation algorithm (504) to the image frames (102).

5. The method of any one of claims 3 or 4, wherein determining depth orders (108) for each object region (406) is further based on the size of the object region (406).

6. The method of any one of claims 1 to 5, further comprising calibrating the imaging system by identifying one or more objects (104) in at least one of the image frames (102), wherein obtaining the qualitative depth information (106) of at least one object is based on the calibration.

7. A method for rendering a new multi-view frame (606) from image frames (102) with depth order data (108) stored using the method of any one of claims 1 to 6, the method comprising:
receiving at least two image frames (102) of the scene and the depth order (108) for a set of at least two objects (104) present in the scene;
creating a texture layer (602) for each depth order (108) based on processing the objects (104) corresponding to each depth order (108) in all received image frames (102) separately; and
combining the texture layers (602) based on their corresponding depth orders (108).

8. The method of claim 7, wherein the texture layers (602) comprise transparent pixels and non-transparent pixels for the objects (104) with the respective depth order (108).

9. The method of claim 8, wherein a texture layer (602) is created by setting all pixel values to transparent and further setting pixels which correspond to the object (104) to non-transparent values.

10. The method of any one of claims 7 to 9, wherein combining the texture layers (602) is based on alpha compositing.

11. The method of any one of claims 7 to 10, wherein each pixel, or a set of pixels, of each texture layer comprises a transparency value and wherein the transparency value relates to the transparency and the blending weight of the pixels, or set of pixels.

12. The method of any one of claims 7 to 11, wherein creating the texture layers (602) is further based on the depth maps (604).

13. A computer program product comprising computer program code means which, when executed on a computing device having a processing system, cause the processing system to perform all of the steps of the method according to any of claims 1 to 12.

14. A processor configured to perform all of the steps of the method according to any of claims 1 to 12.

15. A system for storing multi-view data, the system comprising:
an imaging system comprising a set of at least two cameras to obtain a plurality of image frames (102) from different positions; and
the processor of claim 14 configured to store image frames (102), depth maps (604) and depth order data (108) in a memory.
